# EUROPEAN PATENT SPECIFICATION

(11) **EP 4 301 089 B1**
(45) Date of publication and mention of the grant of the patent: **23.04.2025**
(21) Application number: 22758698.9
(22) Date of filing: 13.01.2022
(51) Int. Cl.: H05B 3/14, H05B 3/28, H05B 3/44

(54) **ELECTRIC INFRARED-HEATING FILM AND MANUFACTURING METHOD THEREFOR, AND ELECTRIC INFRARED-HEATING APPARATUS**
ELEKTRISCHE INFRAROT-ERWÄRMUNGSFOLIE UND HERSTELLUNGSVERFAHREN DAFÜR SOWIE ELEKTRISCHE INFRAROT-ERWÄRMUNGSVORRICHTUNG
FILM CHAUFFANT À INFRAROUGE ÉLECTRIQUE ET SON PROCÉDÉ DE FABRICATION, ET APPAREIL DE CHAUFFAGE À INFRAROUGE ÉLECTRIQUE

(30) Priority: 26.02.2021 CN 202110220155
(43) Date of publication of application: 03.01.2024
(73) Proprietor: Zhengzhou New Century Materials Genome Institute Co., Ltd, Xingyang, Henan 450100 (CN)
(72) Inventor: SHAO, Guosheng, Xingyang, Henan 450100 (CN); ZHANG, Peng, Xingyang, Henan 450100 (CN); LI, Zixuan, Xingyang, Henan 450100 (CN); LU, Liu, Xingyang, Henan 450100 (CN)
(74) Representative: Berggren Oy
(86) International application number: PCT/CN2022/071866
(87) International publication number: WO 2022/179332

(56) References cited:
- EP-A1- 3 425 004
- CN-A- 108 641 426
- CN-A- 108 711 461
- CN-A- 110 028 057
- CN-A- 110 093 058
- CN-A- 110 167 217
- CN-A- 110 167 217
- CN-A- 111 511 049
- CN-A- 113 038 642
- CN-U- 212 305 690

## Description

### Technical Field

The present disclosure relates to an electric infrared-heating film and a manufacturing method therefor, and an electric infrared-heating apparatus, and belongs to the technical field of electric heating materials.

### Background Art

At present, most of high-temperature heating tube products used as air heat sources are in a structure that tube bodies are configured as packaging bodies (shells), heating wires are arranged in the middle thereof, heat is transferred by means of inert gas after power-on and heating up, and radiant luminescence and heating is carried out through silica/ceramic/metal tubes. Heat generated by the heating wires after power-on needs to be transmitted to an inner surface of the shell through the inert gas or vacuum (low-density air) heated and filled around the surface of the heating wire and then transmitted to an outer surface of the shell along a wall direction of the shell to heat the air. According to the first law of thermodynamics, a temperature of the outer surface of the shell is lower than that of the inner surface of the shell, the latter is lower than that of an interface between a heat transfer medium (packaged gas) and the inner wall, and the latter is lower than that of an interface between the heat transfer medium and a surface of the heating wire, such that defects such as a low heat transfer speed and low utilization rate of electrical energy are caused. In order to solve the above problem, an electric heating material can be coated on the inner surface of the packaging shell, so that a heat exchange link in the heat transfer process is reduced, and the heat transfer efficiency and the utilization rate of electrical energy are improved.

However, at present, the electric heating material is mainly a metal/alloy (heating wire) material or a carbon material, and a thermal expansion coefficient thereof is much larger than those of mainstream materials (ceramic, silica, and high-boron temperature-resistant glass) for packaging shell. After heating and cooling for many times, especially under a high-temperature operating condition, material stress change caused by a relatively large thermal expansion coefficient difference easily causes the heating material to fall off from the inner surface of the shell, and thus reduces the service lifetime of heating equipment.

A known electric infrared-heating film is disclosed in CN 110 167 217 A, disclosure on which the preamble of claim 1 is based.

### Summary

The present disclosure provides an electric infrared-heating film according to claim 1 "

**In** some embodiments, in a Raman spectrogram of the low-defect graphene, a ratio of D peak intensity to G peak intensity is not greater than 1/10, and a carbon-oxygen molar ratio in the low-defect graphene is not less than 20:1.

**In** some embodiments, the Raman spectrogram of the low-defect graphene has a 2D peak, and a distance between the 2D peak and the G peak is reduced by 5 cm⁻¹ or more compared with a distance between a 2D peak and a G peak of natural flake graphite.

**In** some embodiments, a thermal expansion coefficient of the inorganic filler in a range of operating-condition temperature of the electric infrared-heating film or in a range of 0-600 °C is less than or equal to 5×10⁻⁷/K.

In some embodiments, D50 particle size of the inorganic filler is less than D50 particle size of the low-defect graphene.

In some embodiments, the particle size D50 of the inorganic filler is less than 1/150 of the D50 particle size of the low-defect graphene.

In some embodiments, the inorganic filler is any one or any combination of aluminum oxide ceramic powder, zirconium oxide ceramic powder, silicon oxide powder, mica powder, and silicon carbide powder filling materials; and the D50 particle size of the inorganic filler is less than or equal to 100 nm.

In some embodiments, a thickness of the electric infrared-heating film is not greater than 100 µm.

In some embodiments, a thickness of the electric infrared-heating film is 10~30 µm.

In some embodiments, the following steps are included: coating a slurry mainly composed of the low-defect graphene, the inorganic filler, a film-forming agent, and a solvent into a film, volatilizing the solvent, and then performing a carbonization treatment, to obtain the electric infrared-heating film, wherein the film-forming agent is an organic polymer.

In some embodiments, the organic polymer is one or any combination of polyolefin, polystyrene, polyacrylate polymer, polyethylene oxide, polyvinylidene fluoride, polyimide, polyurethane, polyacrylonitrile, and phenolic resin

**In** some embodiments, the slurry further includes a graphene dispersing agent; the graphene dispersing agent includes a slurry dispersing agent and a thin film dispersing agent; the slurry dispersing agent is one or any combination selected from diphenyl ether, C12-C16 alkyl benzene sulfonate, ethylene oxide, polyethylene glycol, dibasic acid ester, C12-C16 alkyl diphenyl ether monosulfonate, C12-C16 alkyl diphenyl ether disulfonate, C12-C16 alkyl sulfonate, and p-C12-C16 alkyl benzene sulfonate; and the thin film dispersing agent is one or any combination selected from C12-C16 alkyl diphenyl ether monosulfonate, C12-C16 alkyl sulfonate, alkyl polyglucose, propylene oxide, fatty alcohol alkoxy compound, hydroxyl propyl methyl cellulose, and polyvinylpyrrolidone.

In some embodiments, the carbonization treatment is performed at a temperature of 600-1200 °C, for not less than 4 h.

The present disclosure further provides an electric infrared-heating apparatus, including:
an electric infrared-heating element; and
the electric infrared-heating film as in any one of the above, arranged on an inner wall of the electric infrared-heating element, and sealed inside the electric infrared-heating element.

In some embodiments, the electric infrared-heating element includes one of a lamp-type electric infrared-heating element, a tubular electric infrared-heating element, or a plate-type electric infrared-heating element.

The present disclosure further provides an electric infrared-heating apparatus, including:
a tube body;
the electric infrared-heating film as in any one of the above, arranged on an inner wall of the tube body, and sealed inside the tube body; and
two electrodes, both being electrically connected to the electric infrared-heating apparatus, and making the electric infrared-heating film emit heat when being powered on.

In some embodiments, the tube body is a silica tube, a ceramic tube or a glass tube.

The present disclosure further provides an electric infrared-heating apparatus, including:
a plate-type electric infrared-heating element; and
the electric infrared-heating film as in any one of the above, wherein
the plate-type electric infrared-heating element includes a panel structure and an electrode; the electric infrared-heating film is coated on an inner wall of the panel structure, and the electrode is electrically connected to the electric infrared-heating apparatus, and makes the electric infrared-heating film emit heat when being powered on.

### Brief Description of Drawings

FIG. 1 is a structural schematic diagram of an electric infrared-heating apparatus in Example 13;
FIG. 2 is a schematic diagram of a cross section of an electric infrared-heating apparatus in Examples 13, 19, and 20;
FIG. 3 shows heating curves of heating up to 300 °C of the electric infrared-heating apparatuses in the examples and comparative examples in Experimental Example 2; and
FIG. 4 is a structural schematic diagram of the electric infrared-heating apparatuses in some embodiments of the present disclosure.

In the above, 1-silica tube, 2-electric infrared-heating film, 3-electrode, 4-sealing head, 5-panel structure, 51-first substrate, 52-second substrate, 6-metal electrode in a shape of Chinese character " 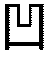 ".

### Definitions of terms

Before the present disclosure is described using embodiments and examples, it should be understood that the terms used herein are merely for the purpose of describing particular embodiments and examples, and are not intended to limit the scope of the present disclosure.

As used herein, the term "defected graphene" means that various defects in raw materials are introduced or preserved in the graphene in a preparation process. Defects appearing in the graphene can be classified into three types. The first type is carbon vacancy and interstitial carbon, i.e., carbon atom deletion at a substitution position in sp2hybridized carbon atoms of graphene, or carbon atoms existing at a carbon atom interstitial position. The second type of defect is "intrinsic defect", caused by non-sp2 orbital hybridized carbon atoms on graphene, where changes in these orbital hybridization forms of carbon atoms are usually caused by lack of or extra carbon atoms in six-membered carbon ring where the carbon atoms are located or surrounding six-membered carbon rings. Typically, the intrinsic defect is due to a limited sheet diameter of the graphene and unbound electrons at an edge thereof, and is formed by non-sp2 orbital hybridized carbon atoms on the graphene. The third type of defect is impurity defect, also called as "impure defect", caused by bonding of noncarbon elements at substitution position, or interstitial position, or impurities bonded to carbon atoms outside (001) facet, and these defects are caused by noncarbon atoms covalently bonded to graphene carbon atoms. For example, in a method of reducing graphite oxide through chemical routine, since a large amount of oxygen-containing functional groups are introduced into the graphene oxide in a preparation process, sp2 carbon lattice structure is seriously damaged, and graphene produced therefrom often contains a large amount of defects throughout the carbon sp2 lattice plane , thus leading to largely lost long-range periodicity ordered structure in the graphene lattice plane (typically, 2D peaks being lack in Raman spectra). In the text, the "low-defect graphene" generally refers to a graphene material that is substantially free of the first type of defect and the third type of defect (impurity defect), or a graphene material with rare defects of the first type and the third type. Typically, the graphene material may be a graphene material dominated by the second type of defect (intrinsic defect), substantially free of or with fewer defects of the first type and the third type. Typically, the intrinsic defect of the "low-defect graphene" is mainly formed by edge state carbon atoms of graphene sheet layer. Typically, the "low-defect graphene" usually has a crystalline structure dominated by sp2 carbon, and has a characteristic of a high carbon-oxygen ratio. Typically, in the Raman spectrogram of the low-defect graphene, a ratio of D peak intensity to G peak intensity (i.e., the ratio between the D peak intensity and the G peak intensity) is not greater than 1/10. Typically, a molar ratio of carbon to noncarbon atoms (i.e., carbon/noncarbon atoms) (e.g., heteroatoms, such as N and O) in the low-defect graphene is greater than or equal to 20:1. For example, the carbon-oxygen molar ratio in the low-defect graphene is not less than 20:1. For example, the low-defect graphene may be graphene prepared by a physical detonation method.

As used herein, the term "amorphous carbon" refers to those carbon materials having an extremely low degree of crystallization and being in an amorphous state (i.e., carbon atoms are not arranged in a long-range periodically ordered structure, also called as a glassy condensed state), such as carbon black, and is a large class of allotropes of carbon.

As used herein, the term "natural flake graphite" refers to natural laminal graphite, has a shape similar to fish scale, belongs to a hexagonal crystal system, and is in a layered structure. Generally, the natural flake graphite has good properties such as high temperature resistance, good electrical conductivity and thermal conductivity, being lubricating, and being resilient to acid and alkali media.

As used herein, the term "D peak" belongs to Raman characteristic peak of C atomic crystal, and D-peak represents defect level in C atomic crystal.

As used herein, the term "G peak" belongs to the Raman characteristic peak of C atomic crystal, and the G-peak represents in-plane stretching vibration of C atom sp2 hybridization.

As used herein, the term "2D peak", also known as G* peak, is caused by dual resonance Raman scattering emitted by dual phonons, and a basic condition for its occurrence is having a crystalline structure characteristic of hexagonal crystal plane composed of long-range ordered sp2 carbon bonds.

### Detailed Description of Embodiments

The present disclosure provides an electric infrared-heating film having a relatively low thermal expansion coefficient difference from a packaging shell material, which can significantly prolong service lifetime of a heating device.

The present disclosure further provides a manufacturing method for the above electric infrared-heating film and an electric infrared-heating apparatus using the above electric infrared-heating film.

An embodiment of the present disclosure provides an electric infrared-heating film, wherein a technical solution used by the electric infrared-heating film is as follows.

An electric infrared-heating film, mainly composed of the following components in parts by weight: 10-15 parts of low-defect graphene, 5~20 parts of an inorganic filler, and 5~10 parts of amorphous carbon. **In** some embodiments, the electric infrared-heating film mainly can be composed of the following components in parts by weight: the low-defect graphene may be, for example, 10 parts, 10.5 parts, 11 parts, 11.5 parts, 12 parts, 12.5 parts, 13 parts, 13.5 parts, 14 parts, 14.5 parts, and 15 parts, the inorganic filler may be, for example, 5 parts, 6 parts, 7 parts, 8 parts, 9 parts, 10 parts, 11 parts, 12 parts, 13 parts, 14 parts, 15 parts, 16 parts, 17 parts, 18 parts, 19 parts, and 20 parts, and the amorphous carbon may be, for example, 5 parts, 5.5 parts, 6 parts, 6.5 parts, 7 parts, 7.5 parts, 8 parts, 8.5 parts, 9 parts, 9.5 parts, and 10 parts.

For the electric infrared-heating film in the present disclosure, the use of the low-defect graphene can make the electric infrared-heating film to be rapidly heated to 300°C and above (including 300 °C) and reduce the expansion coefficient of the electric infrared-heating film when being powered on, and the inorganic filler, having an expansion coefficient lower than that of the low-defect graphene, can reduce the volumetric expansion coefficient of the electric infrared-heating film and the thermal stress generated in the rapid heating, and the amorphous carbon, being elastic, can buffer volumetric expansion of the low-defect graphene and the inorganic filler, further reduce the volumetric expansion of the electric infrared-heating film, so as to reduce differences between the volumetric expansion coefficients of the electric infrared-heating film and matrix materials such as ceramic, silica, and high-boron temperature-resistant glass, prevent the electric infrared-heating film from falling off from surfaces of these materials, and prolong the service lifetime of the electric infrared-heating apparatus.

**In** addition, the low thermal expansion property possessed by the inorganic filler in the electric infrared-heating film in the present disclosure can improve integrity of the film during heating, and the low-defect graphene further can improve the thermal conductivity of the electric infrared-heating film, and further improve heat exchange efficiency of the electric infrared-heating film and the matrix material. Meanwhile, a semiconductor electronic structure specific to the low-defect graphene has the capability of emitting photons with wavelength in an infrared-far infrared region to irradiate and heat a target object through the electron relaxation process. Moreover, pz orbital and sp2-σ orbital of the carbon atom in the low-defect graphene are highly coupled, and can provide good high-temperature sustainability and good high-temperature structural stability compared with other conductive materials, such that higher safety and longer service lifetime of devices using the electric infrared-heating film can be achieved. Compared with the conventional high-temperature electric heating material, the electric infrared-heating film provided in the present disclosure has unique advantages such as a small thermal expansion coefficient and quick heat conduction.

**The** electric infrared-heating film in the present disclosure has a relatively high matching degree of thermal expansion coefficient with a silica tube, and at a temperature rising rate of 50 °C/s, a stress generated by a thermal volumetric expansion difference between the electric infrared-heating film and the silica at 800 °C is lower than the peel strength of the electric infrared-heating film, thus greatly improving an upper limit of a heating temperature of the electric infrared-heating film.

**It** can be understood that in addition to the low-defect graphene, the amorphous carbon, and the inorganic filler, the electric infrared-heating film in the present disclosure further may have some impurity components.

**In** order to further improve the thermal conductivity of the electric infrared-heating film, in the Raman spectrogram of the low-defect graphene, a ratio of D peak intensity to G peak intensity is not greater than 1/10. For example, the ratio of the D peak intensity to the G peak intensity is 1/10, 1/20, 1/30, 1/40, 1/50, 1/60, or 1/70. Generally, defect density of graphene is represented by a ratio of intensity of the D peak to intensity of the G peak in the Raman spectrogram. **In** the present disclosure, the thermal conductivity of a low-defect graphene heat exchange film can be further improved by reducing defect density of the low-defect graphene. **The** oxygen-carbon molar ratio of the low-defect graphene is not greater than 1/20 (namely, carbon-oxygen molar ratio in the low-defect graphene is not less than 20:1). For example, the oxygen-carbon molar ratio of the low-defect graphene can be 1/20, 1/30, 1/40, 1/50, 1/60, or 1/70. **In** the present disclosure, by controlling the oxygen-carbon molar ratio of the low-defect graphene within the foregoing range, it can be ensured that the material has good thermal conductivity and electrical conductivity, thereby avoiding changes in power and heat exchange performance caused by atomic rearrangement of the graphene as a main conductive material under a high temperature. **In** the present disclosure, by reducing the defect concentration of the low-defect graphene used, when a thickness of the infrared-heating film is less than 30 µm, the thermal conductivity coefficient can be greater than 200 W/(K·m). **In** order to further ensure thermodynamic properties such as stability and thermal conductivity of the low-defect graphene, in some typical embodiments, the Raman spectrogram of the low-defect graphene has a 2D peak, and compared with a distance between the 2D peak and the G peak of the natural flake graphite, a distance between the 2D peak and the G peak is decreased by 5 cm⁻¹ or more, such as 5 cm⁻¹, 8 cm⁻¹, 10 cm⁻¹, 12 cm⁻¹, 14 cm⁻¹, 16 cm⁻¹.

**In** some embodiments, D50 particle size of the low-defect graphene is 10~20 µm, such as 10-15 µm, 15~20 µm or 12-18 µm, for example, 10 µm, 12 µm, 14 µm, 16 µm, 18 µm, and 20 µm.

**The** inorganic filler used in the present disclosure has good chemical and structural stability in the range of operating-condition temperature of the electric infrared-heating film. **In** some typical embodiments, the thermal expansion coefficient of the inorganic filler in the range of operating-condition temperature of the electric infrared-heating film is below 5×10⁻⁷/K (including 5×10⁻⁷/K).

Considering the cost, slurry dispersion, and structural stability of the electric infrared-heating film comprehensively, the inorganic filler is any one or any combination of aluminum oxide ceramic powder, zirconium oxide ceramic powder, silicon oxide powder (i.e. silica powder), mica powder, and silicon carbide powder filling materials. A thermal expansion coefficient of the inorganic fillers listed above is below 5×10⁻⁷/K (including 5×10⁻⁷/K) at 0-600 °C.

In some typical embodiments, the D50 particle size of the inorganic filler is smaller than the D50 particle size of the low-defect graphene, and in some typical embodiments, the D50 particle size of the inorganic filler is smaller than **1/150 of the D50 particle size of the low-defect graphene.**

**In** order to further reduce the expansion coefficient of the electric infrared-heating film, in some typical embodiments, the D50 particle size of the inorganic filler is less than or equal to 100 nm. **In** some embodiments, the D50 particle size of the inorganic filler is greater than or equal to 20 nm. Since a sheet diameter of graphene as a two-dimensional structure material is far greater than particle diameter of the inorganic filler, after film formation, the inorganic filler and the amorphous carbon fill gaps between graphene sheets, thus inhibiting an overall stress increase of the thin film caused by graphene vibration under a high temperature, thereby maintaining integrity of a graphene composite thin film under a high temperature.

**In** some embodiments, the amorphous carbon may be partially or completely formed by carbonization of an organic polymer. **In** some embodiments, the organic polymer includes, but is not limited to, one or any combination of polyolefin, polystyrene, polyacrylate polymer, polyimide, polyurethane, polyacrylonitrile and its modified derivatives, and phenolic resin. **In** some embodiments, the polyolefin includes, but is not limited to, one or any combination of polyethylene and polypropylene. **The** polyacrylonitrile and its modified derivatives may be, for example, polyacrylonitrile. **The** polyacrylate polymer may be, for example, polymethyl methacrylate.

**The** thickness of the electric infrared-heating film in the present disclosure may be flexibly set according to an application scenario, for example, not greater than 100 µm. **In** some embodiments, the thickness of the electric infrared-heating film is 10~30 µm. **The** electric infrared-heating film with the thickness of 10-30 µm is advantageous in use compared with thicker electric infrared-heating films in circumstances where quick-heating equipment and the like have requirement on heat transfer efficiency of heating products.

An embodiment of the present disclosure provides a manufacturing method for an electric infrared-heating film, wherein a technical solution used by the method is as follows.

A manufacturing method for the above electric infrared-heating film, including the following steps: coating a film-making slurry mainly composed of low-defect graphene, an inorganic filler, a film-forming agent, a graphene dispersing agent, and a solvent into a film, volatilizing the solvent, and then performing a carbonization treatment, to obtain the electric infrared-heating film, wherein the film-forming agent is an organic polymer.

In the manufacturing method for an electric infrared-heating film in the present disclosure, after the film-making slurry is coated, the coated thin film is shaped in a manner of volatilizing the solvent, then the whole thin film is calcined in a protective atmosphere, to promote carbonization of the film-forming agent in the thin film into amorphous carbon, and form the electric infrared-heating film. This method is convenient for controlling uniformity of the electric infrared-heating film, and facilitates in releasing the stress in the thin film and between the thin film and the matrix material to improve service lifetime of the material, and improving the heat exchange efficiency of the electric infrared-heating film, thus it is applicable to a series of different high-temperature heating products, and reduces production costs.

In some typical embodiments, a mass ratio of the inorganic filler to the low-defect graphene is 5-20:10-15, for example, 5-15:10-15, 10-20:11-15, or 15-20:11-14.

The organic polymer is a polymer that can be carbonized into amorphous carbon, such as resin. In order to improve the film forming property of the above film-making slurry and reduce the production costs, in some embodiments, the organic polymer film-forming agent is one or any combination of polyolefin, polystyrene, polyacrylate polymer, polyethylene oxide, polyvinylidene fluoride, polyimide, polyurethane, polyacrylonitrile, and phenolic resin. The listed organic polymers are all commercially available conventional polymer resins which can be used for high-temperature carbonization, and have excellent film forming property. In some embodiments, the polyolefin is one or any combination of polyethylene and polypropylene. The polyacrylonitrile and its derivatives is polyacrylonitrile. The polyacrylate polymer is one or any combination of polymethyl methacrylate and polyethyl acrylate.

In some typical embodiments, a mass ratio of the film-forming agent to the low-defect graphene is 2.6-9.8:4.9-10.4, for example, 3.0-9.8:5.0-10.4, 2.6-8.0:5.0-9.0, or 3.5-8.5:5.5-7.5.

In order to ensure that the components of the low-defect graphene are well dispersed in the process that the above film-making slurry is solidified into the film at a low temperature, and are uniformly distributed with the film-forming agent after the slurry is formed into the film, a dispersing agent capable of promoting dispersion of the graphene in the system can be used as the graphene dispersing agent. In order to improve the dispersion performance of the low-defect graphene in the above film-making slurry, and ensure the uniformity of material after the slurry is coated. The graphene dispersing agent may include a slurry dispersing agent. The slurry dispersing agent may be, for example, any one or a combination of multiple selected from the group consisting of diphenyl ether, C12-C16 alkyl benzene sulfonate, ethylene oxide, polyethylene glycol, dibasic acid ester, C12-C16 alkyl diphenyl ether monosulfonate, C12-C16 alkyl diphenyl ether disulfonate, C12-C16 alkyl sulfonate, and p-C12-C16 alkyl benzene sulfonate. In some typical embodiments, a molecular weight (M_{w}) of the polyethylene glycol is less than 400. The listed slurry dispersing agents are all commercially available conventional compounds, can be effectively volatilized in the solvent volatilizing process or rarely left in the shaped thin film and completely volatilized in the carbonization. The low-defect graphene is insoluble in any neutral solvent, and has a low degree of solvation with most solvents. In order to further ensure that the low-defect graphene powder can be sufficiently and uniformly dispersed in the film-making slurry, in some embodiments, the mass ratio of the slurry dispersing agent to the low-defect graphene is not lower than 1.1:1, for example, 1.1-2.1:1.

In order to improve dispersion stability (infiltration) of the low-defect graphene in the thin film molding, the dispersing agent includes a thin film dispersing agent. In some typical embodiments, the thin film dispersing agent is one or any combination of C12-C16 alkyl diphenyl ether monosulfonate, C12-C16 alkyl sulfonate, alkylated polyglucose and its derivatives, propylene oxide, fatty alcohol alkoxy compound, hydroxyl propyl methyl cellulose, and polyvinylpyrrolidone. Since the thin film dispersing agent with a large amount of polar functional groups will emit gases during the carbonization, integrity and compactness of the electric infrared-heating film are possibly damaged, and in some typical embodiments, a mass proportion of the thin film dispersing agent in the film-making slurry does not exceed 1%. The mass proportion of the thin film dispersing agent after the carbonization is negligible compared with that of the film-forming agent after the carbonization. The listed organic polymers are all commercially available conventional dispersing agents.

In some typical embodiments, the C12-C16 alkyl diphenyl ether monosulfonate is, for example, sodium hexadecyl diphenyl ether monosulfonate. The C12-C16 alkyl diphenyl ether disulfonate is, for example, sodium hexadecyl diphenyl ether disulfonate. The p-C12-C16 alkyl benzene sulfonate is, for example, propyl p-toluenesulfonate. The C12-C16 alkyl sulfonate is, for example, sodium hexadecyl sulfonate.

In order to further optimize workability performance of a conductive layer, the slurry further includes an additive; and the additive is any one or a combination of multiple of a flatting agent, a thickening agent, a thixotropic agent, and a conductive agent. A mass ratio of an added amount of the additive to the low-defect graphene is not greater than 1:20.

In some embodiments, the film-making slurry has viscosity of greater than 3000 Pa·s, and a solid content of greater than 10 wt%. In some embodiments, the solid content of the film-making slurry is 18.9-25.5%, for example, 19%, 20%, 21%, 22%, 23%, 24%, and 25%, and the viscosity is 3800-7300 Pa·s, for example, 4000-7300 Pa·s, 3800-7000 Pa·s or 4500-6500 Pa·s, such as 4000 Pa·s, 4500 Pa·s, 5000 Pa·s, 5500 Pa·s, 6000 Pa·s, 6500 Pa·s, 7000 Pa·s, and 7200 Pa·s.

In some embodiments, the D50 particle size of the low-defect graphene in the film-making slurry is 10-20 µm.

In some embodiments, a manufacturing method for the film-making slurry includes the following steps: sanding a mixture mainly consisting of a low-defect graphene powder, an inorganic filler, a slurry dispersing agent, and a part of a solvent, adding a film-forming agent, a thin film dispersing agent, and remaining solvent, and mixing them uniformly to obtain the film-making slurry. Through the sanding treatment, the low-defect graphene can be well dispersed, and sheet stacking can be avoided. Particularly, the low-defect graphene used lacks defect and oxidation functional group, and has relatively poor polarizing effect with the solvent, such that crushing the low-defect graphene raw material, performing the sanding treatment on the mixture, and using the dispersing agent can promote uniform dispersion of the low-defect graphene in the slurry and avoid the sheet stacking, which ensures that the low-defect graphene is present in the electric infrared-heating film in a form of a few sheets and a complete structure, and thus improves the infrared radiation performance of the film.

In order to reduce costs and improve the dispersion effect, in some embodiments, the solvent is one or any combination of methanol, ethanol, n-butanol, propylene glycol, ethyl acetate, toluene, xylene, N-methylpyrrolidone (NMP), acetone, N,N-dimethylformamide, tetrahydrofuran, an epoxy reactive diluent, and 1,4-butanediol diglycidyl ether.

In order to balance the sanding dispersion effect, in some typical embodiments, a mass ratio of the low-defect graphene to the dispersing agent in the slurry is 8~15:1~5, such as 10~15:1~5, 11~15:1~4 or 12~15:1~3, for example, 2.9~9.5:1. When preparing the low-defect graphene slurry, a part of the solvent is used as a main solvent, and the remaining solvent added to the prepared low-defect graphene slurry is used as a diluting solvent. In some typical embodiments, the main solvent is one or any combination selected from N-methylpyrrolidone and ethyl acetate; and the diluting solvent is N-methylpyrrolidone. A mass ratio of the diluting solvent to the main solvent is 39~54.8:11.4~22.1, for example, 40~54:11.5~22.0, 39~54:12~20 or 40~52:15~20.

In some embodiments, the carbonization treatment is performed at a temperature of 600-1200 °C for not less than 4 h. In some embodiments, before the carbonization treatment, the temperature is first raised to 400 °C and kept for 1 h, and then the temperature is raised to the temperature for the carbonization treatment to perform the carbonization treatment. A rate of raising the temperature is 5 °C/min. After the carbonization treatment, the temperature of the carbonization treatment is first lowered to 500 °C and the temperature is kept for 1 h, and then the temperature is lowered. The carbonization treatment is performed in a protective atmosphere.

An embodiment of the present disclosure provides an electric infrared-heating apparatus, wherein the apparatus includes:
an electric infrared-heating element; and
any electric infrared-heating film in the above, arranged on an inner wall of the electric infrared-heating element, and sealed inside the electric infrared-heating element.

In some embodiments, the electric infrared-heating element includes one of a lamp-type electric infrared-heating element, a tubular electric infrared-heating element, or a plate-type electric infrared-heating element.

In some embodiments, the electric infrared-heating element may be a tubular electric infrared-heating element. In some embodiments, the tubular electric infrared-heating element includes a tube body.

In some embodiments, the electric infrared-heating apparatus includes:
a tubular electric infrared-heating element and any electric infrared-heating film in the above, wherein
the tubular electric infrared-heating element includes a tube body and an electrode; the electric infrared-heating film is arranged on an inner wall of the tube body, the electrode is electrically connected to the electric infrared-heating apparatus, and makes the electric infrared-heating film emit heat when being powered on.

An embodiment of the present disclosure provides an electric infrared-heating apparatus, wherein a technical solution used by the apparatus is as follows:
an electric infrared-heating apparatus, including a tube body; any electric infrared-heating film in the above, arranged on an inner wall of the tube body, and sealed inside the tube body; and two electrodes, both electrically connected to the electric infrared-heating apparatus, and making the electric infrared-heating film emit heat being when powered on.

The electric infrared-heating apparatus in the present disclosure uses the above electric infrared-heating film having a relatively low expansion rate, so that the electric infrared-heating film has a relatively high matching degree of expansion rate with the matrix under a condition of being powered-on, and the electric infrared-heating film is prevented from falling off from the matrix, thus having a relatively long service lifetime.

For the electric infrared-heating apparatus in the present disclosure, the electric infrared-heating film in the present disclosure is provided on the inner wall of the tube body (or the electric infrared-heating element) so as to realize rapid heating to a high temperature (>300 °C), moreover, the electric infrared-heating film takes the low-defect graphene, the inorganic filler, and the amorphous carbon as main components, the performance and structural stability of the electric infrared-heating apparatus under repeated heating and cooling and high-temperature operating conditions can be ensured. Since the electric infrared-heating film fully retains sheet-layer structural characteristic of the low-defect graphene, the electric infrared-heating apparatus can fully exert the intrinsic advantages of high infrared radiation rate and high thermal conductivity of a low-defect graphene material.

In order to further prolong the service lifetime of the electric infrared-heating film, an interior of the tube body (or the electric infrared-heating element) is vacuumized or filled with an inert gas. Vacuumizing the interior of the tubular (or the electric infrared-heating element) matrix or filling the inert gas into the tubular matrix can avoid oxidation of the low-defect graphene and the amorphous carbon at a high temperature.

In some embodiments, the tube body is one of a silica tube, a ceramic tube, and a glass tube, for example, a silica tube. In some embodiments, the silica tube is selected as the tube body, and he electric infrared-heating film in the present disclosure and the silica have a relatively small difference in expansion coefficient. Using the silica tube as the matrix can further prolong the service lifetime of the electric infrared-heating apparatus.

In some embodiments, the tube body has an inner diameter of 8~13 mm, such as 8 mm, 8.5 mm, 9 mm, 9.5 mm, 10 mm, 10.5 mm, 11 mm, 12 mm, and 13 mm. A wall thickness of the tube body is 0.1~2 mm, such as 0.2 mm, 0.5 mm, 0.7 mm, 1 mm, 1.5 mm, 1.8 mm, and 2 mm.

In some embodiments, the electric infrared-heating element may be a plate-type electric infrared-heating element. In some embodiments, the plate-type electric infrared-heating element includes a ceramic plate-type electric infrared-heating element, a mica plate-type electric infrared-heating element, a silica plate-type electric infrared-heating element, and a metal plate-type electric infrared-heating element with a ceramic plating layer.

In some embodiments, the electric infrared-heating apparatus includes:
a plate-type electric infrared-heating element and any electric infrared-heating film in the above, wherein
the plate-type electric infrared-heating element includes a panel structure and an electrode; the electric infrared-heating film is arranged on an inner wall of the panel structure, the electrode is electrically connected to the electric infrared-heating apparatus, and makes the electric infrared-heating film emit heat when being powered on. In some embodiments, the panel structure includes a first substrate and a second substrate. In some embodiments, the first substrate and the second substrate are attached to each other by means of, for example, hot pressing, so as to form a sealed body; the electric infrared-heating film is located on the first substrate or on the second substrate on bonded sides of the first substrate and the second substrate, or on both the first substrate and the second substrate. In some embodiments, a material of the panel structure includes silica, high borosilicate, mica, a carbon steel plate having an insulating ceramic layer, and an aluminum alloy plate having an insulating ceramic layer.

When preparing the electric infrared-heating apparatus in the present disclosure, the following steps are included: coating a slurry mainly consisting of the low-defect graphene, the inorganic filler, the film-forming agent, and the solvent on the inner wall of the tube body to form a film, volatilizing the solvent and then performing the carbonization treatment, cooling, and then installing an electrode and sealing the tube body.

The low-defect graphene used in the present disclosure can be purchased, and also can be prepared according to a method disclosed in a disclosed Chinese patent application CN108622887A.

The technical solutions of the present disclosure are further described below in conjunction with specific embodiments.

### Examples

### I. Examples of the electric infrared-heating film in the present disclosure

### Example 1

An electric infrared-heating film in the present example consisted of the following components in parts by weight: 5 parts of amorphous carbon, 10 parts of low-defect graphene, and 10 parts of inorganic filler, wherein the inorganic filler was nano-silica, and had D50 particle size of 20 nm; D50 particle size of the low-defect graphene was 15 µm, a Raman spectrogram of the low-defect graphene had a 2D peak, and a distance between the 2D peak and a G peak was reduced by more than 5 cm⁻¹ (including 5 cm⁻¹) compared with a distance between a 2D peak and a G peak of natural flake graphite, a ratio of D peak intensity to G peak intensity was 1/20, and meanwhile, the carbon-oxygen molar ratio of the low-defect graphene was 30:1; and a thickness of the electric infrared-heating film was 15 µm.

### Examples 2-6

Electric infrared-heating films in Examples 2-6 all consisted of amorphous carbon, low-defect graphene, and inorganic filler; Raman spectrograms of the low-defect graphene in various examples had a 2D peak, and a distance between the 2D peak and a G peak was reduced by more than 5 cm⁻¹ (including 5 cm⁻¹) compared with a distance between a 2D peak and a G peak of natural flake graphite, and a ratio of D peak intensity to G peak intensity was 1/20, and meanwhile, a carbon-oxygen molar ratio of the low-defect graphene was 30:1; and weight parts of the amorphous carbon, the low-defect graphene, and the inorganic filler in the electric infrared-heating films in various examples, particle size of the low-defect graphene, type and D50 particle size of the inorganic filler, and thickness of the electric infrared-heating film are shown in Table 1.

**Table 1. Type, Specification, and Content of Various Components in Examples 1~6**

| Example | Low-defect graphene | | Amorphous carbon | Inorganic filler | | | Thickness of electric infrared heating film |
|---|---|---|---|---|---|---|---|
| | Parts by weight | D50 particle size | Parts by weight | Parts by weight | Type | D50 particle size | |
| Example 2 | 15 | 15µm | 7 | 10 | Silica | 100nm | 15µm |
| Example 3 | 15 | 15µm | 10 | 10 | Aluminium oxide | 60nm | 20µm |
| Example 4 | 10 | 15µm | 5 | 20 | Zirconium oxide | 80nm | 20µm |
| Example 5 | 15 | 15µm | 10 | 5 | Mica powder | 40nm | 20µm |
| Example 6 | 15 | 15um | 10 | 20 | Silica | 20nm | 30µm |

Low-defect graphene raw materials used in Example 7~12 were purchased from Zhengzhou New Material Technology CO., LTD. (CP 1002 low-defect graphene fine powder series products), which were graphene prepared by a physical detonation method. Raman spectroscopy detection was performed on the low-defect graphene raw materials, wherein a Raman spectrogram of the low-defect graphene had a 2D peak, a distance between the 2D peak and a G peak was reduced by more than 5 cm⁻¹ (including 5 cm⁻¹) compared with a distance between a 2D peak and a G peak of natural flake graphite, a ratio of D peak intensity to G peak intensity is 1/20, and a carbon-oxygen molar ratio was 30:1.

### II. Examples of the manufacturing method for an electric infrared-heating film in the present disclosure

### Example 7

For the manufacturing method for an electric infrared-heating film in the present example, the manufacturing method for an electric infrared-heating film in Example 1 (composition ratio, specification, and parameters) is taken as an example, including the following steps:
1) performing an airflow crushing treatment on a low-defect graphene raw material to obtain a low-defect graphene powder;
2) preparing a film-making slurry:
   mixing a slurry dispersing agent and a main solvent uniformly to obtain a composite base liquid, then adding a main carbon material and an inorganic filler to the composite base liquid, continuing stirring until the main carbon material and the inorganic filler were uniformly dispersed in the composite base liquid, then sanding the resultant at a linear speed of 15 m/s at 20 °C with zirconium balls of 0.3 mm as a grinding medium, to obtain a low-defect graphene dispersion liquid; then adding a film-forming agent, a diluting solvent, and a thin film dispersing agent to the low-defect graphene dispersion liquid, and then stirring the mixture at a speed of 500 rpm at 40 °C for 2 h to obtain the film-making slurry, wherein
   the slurry dispersing agent used was a combination of ethylene oxide and dibasic acid ester (DBE), a mass ratio of ethylene oxide to **DBE** was 1:2, the main solvent was N-methylpyrrolidone (NMP), the inorganic filler was nano-silica, the film-forming agent was polyacrylonitrile (PAN), the diluting solvent was N-methylpyrrolidone, and the thin film dispersing agent was polyvinylpyrrolidone (PVP K30);
   the main carbon material used was the low-defect graphene, in the low-defect graphene dispersion liquid, particle size D50 of the low-defect graphene was 15 µm, and particle size D50 of the inorganic filler was 20 nm; and
   the slurry dispersing agent used accounted for 15% of the mass of the film-making slurry, the main solvent used accounted for 44.1% of the mass of the film-making slurry, the low-defect graphene powder and the inorganic filler used both accounted for 7.4% of the mass of the film-making slurry, the film-forming agent used accounted for 3.7% of the mass of the film-making slurry, the thin film dispersing agent used accounted for 0.7% of the mass of the film-making slurry, and the diluting solvent used accounted for 29.1% of the mass of the film-making slurry; and the film-making slurry obtained had a solid content of 19.1 wt%, and a viscosity of 6000 Pa·s;
3) pouring the film-making slurry into a silica tube with an inner diameter of 8 mm, then repeatedly inverting the slurry inside the silica tube at 50 °C, and finally pouring the slurry out from two ends of the silica tube until no slurry flowed out of two ends within 1 min when the slurry was poured out from two ends separately;
4) placing the silica tube from which the slurry was poured out in step 3) in a 90 °C blasting oven, and then coaxially rotating the silica tube in the same direction at a speed of 4 turns/minute for 30 min until the slurry on an inner wall of the tube was shaped;
5) placing the silica tube after the solidification into a 200 °C blasting oven and drying the same for 30 min, to obtain a uniform inner wall coating of the tube with a thickness of 20 µm; and
6) heating the silica tube in an argon tubular furnace at a flow rate of 0.25 L/min, at a heating rate of 5 °C/min, after keeping the temperature at 400 °C for 1 h, heating to 800 °C, keeping the temperature at 800 °C for 4 h, cooling to 500 °C and keeping the temperature at 500 °C for 1 h, and then cooling freely, that is, forming an electric infrared-heating film with a thickness of 15 µm on the inner wall of the silica tube.

### Examples 8-12

Examples 8-12 are manufacturing methods (composition ratio, specification, and parameters) corresponding to the electric infrared-heating films in Examples 2-6, respectively. For the manufacturing methods of the electric infrared-heating film in Examples 8-12, reference is made to the manufacturing method for an electric infrared-heating film in Example 7. Compositions of the film-making slurries prepared in various examples are shown in Table 2 and Table 3, and the solid content and viscosity of the prepared film-making slurries, the tube bodies used and inner diameters and wall thicknesses of the tube bodies, and thicknesses of the prepared electric infrared-heating films are shown in Table 4. What is not mentioned in Tables 2-4 is the same as the manufacturing method for an electric infrared-heating film in Example 7.

**Table 2. Composition of Film-making Slurry in the Manufacturing Method for an Electric Infrared-heating Film in Examples 8-9**

| Example | Example 8 (preparation method of a heating film in Example 2) | | Example 9 (preparation method of a heating film in Example 3 | |
|---|---|---|---|---|
| | Type | wt% | Type | wt% |
| Main solvent | N-methylpyrrolidone | 39.1 | N-methylpyrrolidone | 43.7 |
| Slurry dispersing agent | Sodium hexadecyl diphenyl ether disulfonate | 0.7 | Polyethylene glycol (M_{w}=300) | 8.3 |
| | Dibasic acid ester | 11.4 | Dibasic acid ester | 4.2 |
| Main carbon material | Low-defect graphene | 9 | Low-defect graphene | 10.4 |
| Inorganic filler | Silica (D50=100 nm) | 6 | Aluminium oxide (D50=60 nm) | 7.1 |
| Film-forming agent | Phenolic resin (37wt% aqueous solution) | 4.4 (dry weight), 13.2 (solution) | Polystyrene emulsion (50wt% water system) | 7.1 (dry weight), 14.2 (emulsion) |
| Diluting solvent | N-methylpyrrolidone | 19.9 | N-methylpyrrolidone | 11.3 |
| Thin film dispersing agent | PVP K30 | 0.7 | Hydroxyl propyl methyl cellulose | 0.8 |

**Table 3. Composition of Film-making Slurry in the Manufacturing Method for an Electric Infrared-heating Film in Examples 10-12**

| Example | Example 10 (preparation method of a heating film in Example 4) | | Example 11 (preparation method of a heating film in Example 5) | | Example 12 (preparation method of a heating film in Example 6) | |
|---|---|---|---|---|---|---|
| | Type | wt% | Type | wt% | Type | wt% |
| Main solvent | Ethyl acetate | 54.8 | N-methylpyrrolidone | 42.6 | N-methylpyrrolidone | 39 |
| Slurry dispersing agent | Polyethylene glycol | 2.9 | Diphenyl ether | 7.1 | Dibasic acid ester | 73 |
| | Propyl *p-*toluenesulfonate | 2.9 | Dibasic acid ester | 7.1 | Sodium hexadecyl sulfonate | 0.5 |
| Main carbon material | Low-defect graphene | 4.9 | Low-defect graphene | 7.1 | Low-defect graphene | 5.9 |
| Inorganic filler | Nano zirconium oxide D50=80nm | 9.7 | Mica powder D50=40nm | 7.1 | Silica D50=20nm | 7.8 |
| Film-forming agent | Polyacrylonitrile | 2.6 | Polyvinylidene fluoride | 7.1 | Polyethylene acrylate (50wt% emulsion) | 9.75 (dry weight), 19.5 (emulsion) |
| Diluting solvent | N-methylpyrrolidone | 21.9 | N-methylpyrrolidone | 21.2 | N-methylpyrrolidone | 19.6 |
| Thin film dispersing agent | Hydroxyl propyl methyl celulose | 0.3 | Sodium hexadecyl sulfonate | 0.7 | PVP K30 | 0.4 |

**Table 4. Solid Content and Viscosity of the Film-making Slurry, the Tube Body Used, Inner Diameter and Wall Thickness of the Tube Body, and Thickness of the Prepared Electric Infrared-heating Film in the Manufacturing Method for an Electric Infrared-heating Film in Examples 8~12**

| | Example 8 | Example 9 | Example 10 | Example 11 | Example 12 |
|---|---|---|---|---|---|
| solid content of slurry | 23.7wt% | 25.4wt% | 18.9wt% | 22wt% | 23.9wt% |
| Viscosity | 6800 Pa•s | 7100 Pa•s | 3800 Pa•s | 7300 Pa•s | 4200 Pa•s |
| Film thickness | 15µm | 20µm | 20µm | 20µm | 30µm |
| Tube body | Quartz tube | Quartz tube | Quartz tube | Quartz tube | Quartz tube |
| Inner diameter/wall thickness of tube body | 8mm/1mm | 13mm/2mm | 8um/1mm | 10um/0.5mm | 8mm/11mm |

**In** other examples of the manufacturing method for an electric infrared-heating film in the present disclosure, it is also possible to replace the silica tube in the manufacturing method for an electric infrared-heating film in Example 9 and Example 12 with a ceramic tube, and replace the silica tube in the manufacturing method in Example 11 with a glass tube.

### III. Examples of the electric infrared-heating apparatus in the present disclosure

### Example 13

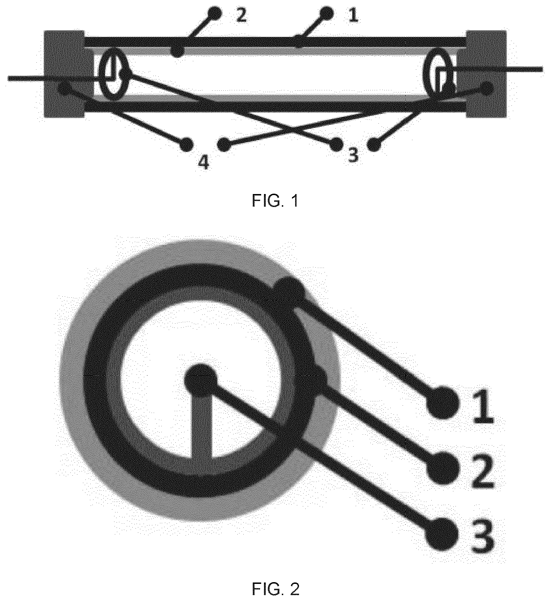

An electric infrared-heating apparatus in Example 13, as shown in FIG. 1 to FIG. 2, includes a silica tube 1, an electric infrared-heating film 2, two lead-out electrodes 3, and two sealing heads 4, wherein the electric infrared-heating film 2 is obtained by coating the electric infrared-heating film prepared by the manufacturing method in Example 7 on an inner wall of the silica tube 1, and the two lead-out electrodes 3 are respectively nested in the silica tube 1 at two ends of the silica tube 1 and are respectively electrically connected to the electric infrared-heating film 2 at two ends of the silica tube 1; and the two sealing heads 4 are respectively located at two ends of the silica tube 1 and seals the silica tube 1, the two lead-out electrodes 3 and the electric infrared-heating film 2 are located in a sealed space of the silica tube 1, and threading holes are respectively provided on the two sealing heads 4 for wires electrically connected to the lead-out electrodes of corresponding ends to pass through.

### Example 14

An electric infrared-heating apparatus in the present example is different from the electric infrared-heating apparatus in Example 13 only in that the electric infrared-heating film on the inner wall of the silica tube is an electric infrared-heating film prepared by the manufacturing method in Example 8.

### Example 15

An electric infrared-heating apparatus in the present example is different from the electric infrared-heating apparatus in Example 13 only in that the electric infrared-heating film on the inner wall of the silica tube is an electric infrared-heating film prepared by the manufacturing method in Example 9.

### Example 16

An electric infrared-heating apparatus in the present example is different from the electric infrared-heating apparatus in Example 13 only in that the electric infrared-heating film on the inner wall of the silica tube is an electric infrared-heating film prepared by the manufacturing method in Example 10.

### Example 17

An electric infrared-heating apparatus in the present example is different from the electric infrared-heating apparatus in Example 13 only in that the electric infrared-heating film on the inner wall of the silica tube is an electric infrared-heating film prepared by the manufacturing method in Example 11.

### Example 18

An electric infrared-heating apparatus in the present example is different from the electric infrared-heating apparatus in Example 13 only in that the electric infrared-heating film on the inner wall of the silica tube is an electric infrared-heating film prepared by the manufacturing method in Example 12.

When preparing the electric infrared-heating apparatuses in Examples 13-18, according to the used manufacturing method for an electric infrared-heating film, after an electric infrared-heating film was formed in the silica tube, lead wires were welded on the lead-out electrodes, and then nano-silver glue was coated on the electric infrared-heating film at two ends of the silica tube, then the two lead-out electrodes were respectively placed in the silica tube from two ends of the silica tube, and attached and fixed to the electric infrared-heating film at a position where the electric infrared-heating film was coated with the nano-silver adhesive, then, sealing heads were installed at two ends of the silica tube in a highly pure argon environment, and lead wires were led out through threading holes reserved in the sealing heads of corresponding ends, and a gap between the lead wire and the threading hole and a gap between the sealing head and the silica tube were sealed by a temperature-resistant sealant.

### Example 19

For an electric infrared-heating apparatus in the present example, only the silica tube in the electric infrared-heating apparatus in Example 13 is replaced with a ceramic tube, only the sealing head at one end of the high-temperature glass tube is provided with threading holes, and the number of threading holes is two, for wires electrically connected to two lead-out electrodes to pass through respectively.

### Example 20

For an electric infrared-heating apparatus in the present example, only a silica tube in the electric infrared-heating apparatus in the Example 18 is replaced with a high-temperature glass tube and the sealing is replaced with thermoplastic sealing, which will not be repeated herein again.

### Example 21

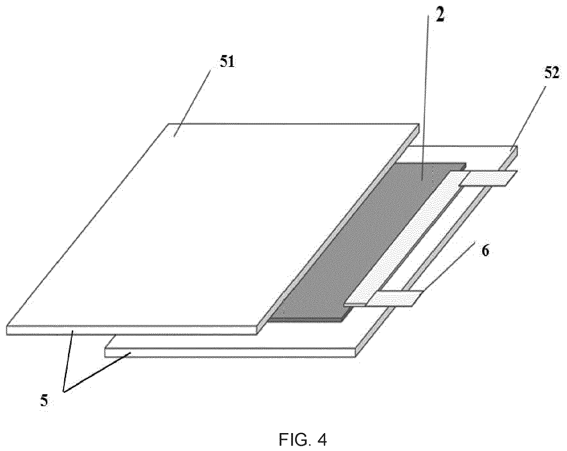

An electric infrared-heating apparatus in the present example, as shown in FIG. 4, includes a panel structure 5, an electric infrared-heating film 2, and a metal electrode 6 in a shape of Chinese character " 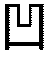 ", wherein the panel structure 5 includes a first substrate 51 and a second substrate 52, material structures of the first substrate 51 and the second substrate 52 are the same, both being a silica material. The electric infrared-heating film 2 was obtained by coating the film-making slurry prepared by the manufacturing method of steps 1) to 2) in Example 7 on a surface of the second substrate 52, and the coated second substrate stood and was fixed at 50 °C until when the second substrate 52 was perpendicular, no slurry thereon flew out within 1 min, subsequently, the second substrate 52 coated with the electric infrared-heating film 2 was placed in a 90 °C blasting oven for 30 min until the slurry on the wall of the second substrate 52 was shaped, and according to operations of steps 5) to 6) in Example 7, the electric infrared-heating film with a thickness of 25 µm was formed on this second substrate 52.

Two metal electrodes 6 in a shape of Chinese character " 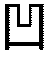 " were respectively fixed at two ends of the electric infrared-heating film 2, connected to the electric infrared-heating film 2, and sealedly nested between the first substrate 51 and the second substrate 52, and two arms of the metal electrodes 6 in a shape of Chinese character " 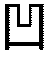 ", as electrodes, were exposed out of the plate for wiring. Then, the first substrate 51 was covered on the surface of the second substrate 52 coated with the electric infrared-heating film 2, and the first substrate and the second substrate were tightly attached by means of hot-press packaging, to form a tightly attached sealed space (the metal electrodes 6 in a shape of Chinese character " 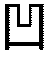 " were selected to reduce a pressure sealing stress and air leakage points).

### Example 22

An electric infrared-heating apparatus in the present example is the same as that in Example 21. Differences lie in that the panel structure 5 was made of a high borosilicate material, and packaging was performed by hot pressing.

### Example 23

An electric infrared-heating apparatus in the present example is the same as that in Example 21. Differences lie in that the panel structure 5 was made of a mica material, and packaging was performed by a high-temperature-resistant adhesive.

### Example 24

An electric infrared-heating apparatus in the present example is the same as that in Example 21. Differences lie in that the panel structure 5 was made of a carbon steel plate material with an insulating ceramic layer, wherein the insulating layer was located inside, and the carbon steel material was located outside, and packaging was performed by a high-temperature-resistant adhesive.

### Example 25

An electric infrared-heating apparatus in the present example is the same as that in Example 21. Differences lie in that the panel structure 5 was made of an aluminum alloy plate material with an insulating ceramic layer, wherein the insulating layer was located inside, and the aluminum alloy material was located outside, and packaging was performed by a high-temperature-resistant adhesive.

Reduced graphene oxide used in comparative examples was prepared by a HUMMER method, and had a lot of defects.

### Comparative Examples 1-6

Electric infrared-heating apparatuses in Comparative Examples 1-6 differ from the electric infrared-heating apparatus in Example 13 only in the electric infrared-heating film on the silica tube.

When preparing the electric infrared-heating film on the inner wall of the silica tube in Comparative Examples 1-6, reference was made to the manufacturing method for an electric infrared-heating film in Example 7. In Comparative Examples 2-6, in order to ensure that the interior of the silica tube can be uniformly coated to form the electric infrared-heating film with a thickness of 15 µm, an added proportion (solid content) of the diluting solvent was adjusted. Besides, the main carbon material and solid content in the film-making slurries prepared in various comparative examples, a linear speed of sanding and the number of cycles, a thickness of the prepared electric infrared-heating film, and mass ratios of the main carbon material, the filler, and the amorphous carbon in the electric infrared-heating film are shown in Table 5. Contents not mentioned are completely the same as those in Example 7.

**Table 5. Composition, Thickness, and Manufacturing Method for the Electric Infrared-heating Film on the Inner Wall of the Silica Tube of the Electric Infrared-heating apparatus in Comparative Examples 1-6**

| Sample | Type and specification of main carbon material | Linear speed of sanding and the number of cycles | Ratio of main carbon material/ filler/amorphous carbon | Solid content | Thickness of thin film |
|---|---|---|---|---|---|
| Comparative Example 1 | Redox graphene D50=5µm | Linear speed of sanding 5 m/s 5 cycles | 10:10:5 | 19.1wt% | 150µm (nonuniform) |
| Comparative Example 2 | Redox graphene D50=5µm | Linear speed of sanding 5 m/s 5 cycles | 10:10:5 | 6,4wt% | 15µm |
| Comparative Example 3 | Redox graphene D50=15µrn | Linear speed of sanding 5 m/s 5 cycles | 10:20:5 | 9.5wt% | 15µm |
| Comparative Example 4 | High temperature repair of redox graphene D50-15µm | Linear speed of sanding 5 m/s 5 cycles | 10:20:5 | 17.5wt% | 15µm |
| Comparative Example 5 | Multi-walled carbon nanotubes Φ 7 nm, 320 nm long | Linear speed of sanding 5 m/s 5 cycles | 10:10:5 | 15.2wt% | 15µm |
| Comparative Example 6 | Super-P carbon nanosphere D50=20 nm | Linear speed of sanding 5 m/s 5 cycles | 10:10:10 | 16.6wt% | 15µm |

### Experimental Example 1

Film-forming performances of the film-making slurry in the process of forming the electric infrared-heating film on the silica tube in Examples 13, 16, and 18 and Comparative Example 1~6 were compared, and results are as shown in Table 6.

**Table 6. Film-forming Property of the Film-making Slurry in Examples 13, 16, and 18 and Comparative Example 1~6**

| | Comparative Example 1 | Comparative Example 2 | Comparative Example 3 | Comparative Example 4 | Comparative Example 5 | Comparative Example 6 | Example 13 | Example 16 | Example 18 |
|---|---|---|---|---|---|---|---|---|---|
| In-tube coating | Nonuniform coating | Normal | Normal | Normal | Normal | Normal | Normal | Normal | Normal |
| Drying molding | Material fall | Bottom exposure | Normal | Normal | Normal | Normal | Normal | Normal | Normal |
| Carbonization | Stop experiment due to material fall | Stop experiment due to material fall | Partially detached from the tube wall | Normal | Normal | Normal | Normal | Normal | Normal |

It can be seen from Table 6 that the electric infrared-heating films (taking Examples 13, 16, and 18 as examples) in the present disclosure use the low-defect graphene, with low solvating performance, and by means of mechanical blending, a solid content ratio of the low-defect graphene in the electric heating film material can be improved.

The defect concentration of the reduced graphene oxide on the market used in the comparative examples is relatively high, the sheet diameter of the graphene prepared by the oxidation and reduction method is generally relatively small, the degree of solvation in the slurry is relatively high, and in cases where the components of the graphene dispersion liquid and contents of various components are consistent, the slurry using the commercially available reduced graphene oxide has a significant increase in consistence and a significant decrease in fluidity, then the uniform coating in the tube cannot be achieved by the method mentioned in step 4) (step 4 in Example 7) or other means. After a high-sheet-diameter graphene material is selected, as edge state concentration (density) of the reduced graphene oxide is reduced, and the degree of solvation is reduced, since defects on (110) facet of the repaired graphene oxide material are reduced, the degree of solvation can be further reduced, and thus the solid content of the slurry can be significantly improved. By the same reasoning, since carbon nanotubes and carbon nanospheres have a relatively large specific surface area, and the degree of solvation is high, the solid content likewise cannot be improved. Therefore, in Comparative Examples 2-6, the slurry was prepared by reducing the solid content. However, the practice of aimlessly reducing the solid content of the slurry to improve the fluidity of the slurry not only reduces the viscosity (not consistence) of the slurry, which is unfavorable to stable attachment of the slurry to a smooth tube wall (Comparative Example 2), but also easily causes phenomena such as looseness of internal structure of dry film and appearance of pinholes due to evaporation of a large amount of solvent in the drying process of the coated slurry, which is not conducive to the film-forming property of the dried material.

In Experimental Examples 2-4, all parallel comparison tests were conducted in open, convection-free environments, and if not specified, all test ambient temperatures were 25±0.5 °C. The electric infrared-heating apparatuses in Examples 13, 16, and 18 and Comparative Examples 4~6 had an outer diameter of 10 mm and an effective heating length of 285 mm, i.e., an effective heat emitting area is 89.5 cm². An infrared imager was used to measure temperatures, with accuracy of ±0. 1 °C and an error of ±2 °C. An experimental power supply was a regulated and adjustable AC power supply, with a frequency of 50 Hz, accuracy of ±0.1 V, and an error of ±1 V.

### Experimental Example 2

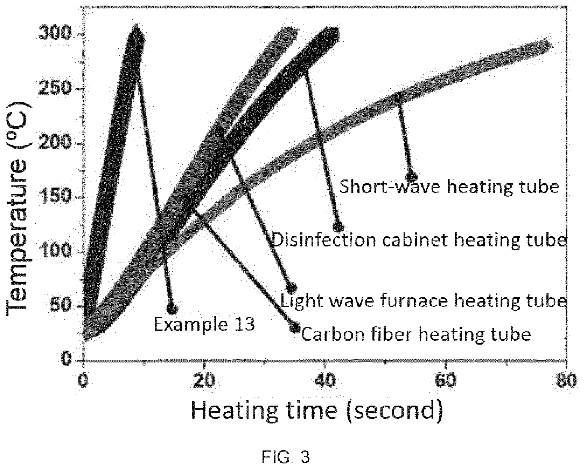

The electric infrared-heating apparatuses in Examples 13, 16, and 18 and Comparative Examples 4~6 were subjected to repeated heating tests at a constant power of 180 W. After the constant temperature was reached, the temperature was kept for 15 minutes, and when the temperature was lowered to below 26 °C, the electric infrared-heating apparatuses were tested again. Raising the temperature to the constant temperature and keeping the temperature were performed for 10 times. Reference is made to Table 7 for an effective heating area of each electric infrared-heating apparatus, the constant temperature, duration for raising the temperature to the constant temperature, and state of the electric infrared-heating apparatus after repeated heating. Heating curves of various electric infrared-heating apparatuses obtained from the tests are shown in FIG. 3.

**Table 7. Surface Temperature and Durability of the Electric Infrared-heating Apparatus at Constant Power**

| | Comparative Example 4 | Comparative Example 5 | Comparative Example 6 | Example 13 | Example 16 | Example 18 |
|---|---|---|---|---|---|---|
| Total power (watt | 180 | 180 | 180 | 180 | 180 | 180 |
| Effective heating area (cm²) | 89.5 | 89.5 | 89.5 | 89.5 | 89.5 | 89.5 |
| Constant temperature (°C) | 458 | 452 | 448 | 453 | 449 | 456 |
| State after test | The resistance rises along with heating time and test times, the resistance change rate after 10 times > 20% | Normal | After 7 times of the test the inner wall coating cracks | Normal | Normal | Normal |

It can be seen from data in Table 7 that the electric infrared-heating films prepared in the examples of the present disclosure (taking Examples 13, 16, and 18 as examples) have a relatively high surface temperature and excellent durability, and at the same time, the high solid content proportion of the low-defect graphene in the electric heating film material contained in the examples of the present disclosure reflects the high durability of the electric infrared-heating films of the present disclosure in repeated heating tests. A conductive loop in a heating material realizes electrical conduction by means of physical contact by main carbon material-main carbon material and main carbon material-amorphous carbon. The electric infrared-heating film prepared in the examples of the present disclosure (taking Examples 13, 16, and 18 as examples) fully satisfies the characteristics to be dealt with in this process: (a) overall stress change of the thin film in the heating and cooling process; (b) contact stability of the conductive loop after expansion and contraction of the main carbon material in the repeated heating and cooling process: point-point contact < line-line contact < surface-surface contact; and (c) chemical stability of the main carbon material and the oxide ceramic under high temperature and electric field environment.

The commercial graphene used in Comparative Example 4, due to high defects and poor thermal stability, even under the protection of a highly pure inert gas, still will have structural rearrangement thereof under a high-temperature power-on operating condition, resulting in irreversible structural damage to the reduced graphene oxide material, causing continuous increase of the resistance thereof, and affecting the service lifetime thereof. For the graphene used in Comparative Example 4, although most defects of the third type are removed by a high temperature method, it is difficult to repair the first type of defects through this process. Therefore, the above requirement (c) is not met. Although carbon nanotubes in Comparative Example 5 have relatively good structural stability, and have an effect of structural stability on the electric infrared-heating film, due to structural reason thereof, the dispersion performance thereof is poor, and it is difficult to increase the solid content, then it is hard to reduce the influence of the solvent content on the film formation. In addition, its one-dimensional electrically and thermally conductive property causes relatively low thermal conductivity of the carbon nanotubes along a wall diameter. Although the Super-P as nano carbon sphere in Comparative Example 6 has a good three-dimensional electrically and thermally conductive effects, since point contact is used with other materials, and the Super-P itself is easily affected by Brownian movement and thermal expansion stress in the heating process, a three-dimensional conductive network constructed thereby is locally damaged, which is not conducive to maintaining the overall electric-thermal performance of the electric infrared-heating film under the operating condition. The Super-P used in Comparative Example 6 is nano carbon microspheres, which hardly meet the requirement (b). Therefore, after multiple times of heating and cooling, the main carbon materials contact each other, short circuit occurs due to thermal expansion and contraction, thus leading to a high local temperature and electric discharge, and further leading to cracking of the thin film.

### Experimental Example 3

Heating rates of Examples 13, 16, and 18 of the present disclosure and several commercially available heating tubes were compared respectively, and results are shown in Table 8.

Commercially available heating tubes as high-temperature air heat sources (rated power ≥400 W, working temperature ≥300 °C, capable of empty burning) that can be purchased are all assembled in such a way that heating wires penetrate through along a central axis of tube body; a heating tube of a commercially available disinfection cabinet has a rated power of 400 W (a heating body is helical alloy heating wires); a heating tube of a commercially available light wave furnace has a rated power of 400 W (a heating body is straightened carbon fiber heating wires); a commercial carbon fiber heating tube has a rated power of 800 W (a heating body is straightening carbon fibers); and a commercial metal wire short-wave infrared-heating tube has a rated power of 500 W (a heating body is straightened alloy heating wires). The heating tubes were heated with a constant power, a temperature sampling interval was 7.5 Hz, duration for heating surfaces of the tube bodies to 300 °C was measured, and power density was calculated. Results are as shown in Table 8.

**Table 8. Test Results of Heating Speed Test on the Surface of the Heating Tube in Open Environment in Examples and Comparative Examples**

| | Heating tube of disinfection cabinet | Heating tube of light wave furnace | Carbon fiber heating tube | Metal wire short-wave infrared heating tube | Example 13 | Example 16 | Example 18 |
|---|---|---|---|---|---|---|---|
| Total power | 360W | 360W | 300W | 360W | 300W | 300W | 300W |
| Specification of heating tube | 260*Φ12 mm | 263*Φ12 mm | 285*Φ10 mm | 260*Φ10 mm | 285*Φ10 mm | 285*Φ10 mm | 285*Φ10 mm |
| Power density (W/cm²) | 3.67 | 3.63 | 3.35 | 4.98 | 3.35 | 3.35 | |
| Heating time (second) | 40 | 34 | 34 | 80 | 8 | 10 | 8.7 |

It can be seen from data in Table 8 that, by comparing the electric infrared-heating apparatuses in the examples with the heating tubes in the comparative examples, the electric infrared-heating apparatuses in the examples have a prominent advantage in the heating speed of the surface of the tube body in the open environment under the same power or lower power/power density. The electric infrared-heating apparatuses in the present disclosure have significant improvements on electrical energy utilization rate, heat transfer and heating efficiency compared with various commercially available heating tubes. Taking the commercially available metal wire short-wave infrared-heating tube as an example, a heating body thereof has the smallest volume, an outer contour is the farthest from the tube body, and the heating speed is the slowest, thus reflecting the advantage of heating performance brought about by the electric infrared-heating apparatuses in the present disclosure.

### Experimental Example 4

Under a constant power (180-185 W), operating condition temperatures of Examples 13, 16, and 18 and several commercially available heating tubes listed in Experimental Example 3 were tested by an infrared imaging thermometer (FLIR E60, with an error of ±2 °C), and conversion rates of infrared radiation thereof were calculated according to Stefan-Boltzman law. Corresponding test parameters and results are as shown in Table 9.

**Table 9. Surface Temperature of the Heating Tube at Constant Power and Corresponding Infrared Radiation Conversion Rate**

| | Heating tube of disinfection cabinet | Heating tube of light wave furnace | Carbon fiber heating tube | Metal wire short-wave infrared heating tube | Example 13 | Example 16 | Example 18 |
|---|---|---|---|---|---|---|---|
| Total power (W) | 180 | 180 | 180 | 180 | 180 80 | 180 | 180 |
| Effective heating area (cm²) | 98 | 99.1 | 89.5 | 81.6 | 89.5 | 89.5 | 89.5 |
| Constant temperature (°C) | 343 | 369 | 407 | 379 | 453 | 456 | 451 |
| Infrared conversion rate (%) | 40 | 49 | 56.2 | | 76.1 | 77.4 | 75.2 |

It can be seen from data in Table 9 that, for the electric infrared-heating apparatus in the examples, the infrared conversion rate thereof reaches more than 75%, and the heating body is closely attached to the outer wall of the heating apparatus. Therefore, it is judged that the heat exchange mechanism thereof is primarily radiation heat exchange and secondarily heat conduction. Compared with the design that the heating body and the tube wall are separated for the common commercially available heating tubes, the temperature of the outer wall of the apparatus directly comes from the heating film, and convection heat exchange and the heat transfer mechanism of the heating body-inner environment-tube wall do not exist anymore, which has a relatively low tube surface-heating body temperature difference, such that the utilization rate of electrical heat energy is higher, and there is a significant advantage on the infrared radiation conversion rate. Compared with the common electric infrared conversion of 40-56.2% of the commercially available heating tubes, the electric infrared conversion rate of the electric infrared-heating apparatus in the examples still has an infrared radiation conversion rate of greater than 75% even at less than half the average power (400-500 W) of the commercially available heating tubes, which is because its superior infrared radiation performance is largely due to the extra infrared radiation capability of the low-defect graphene and the seamless heat transfer design between the electric infrared-heating film and the tube wall achieved by the superior material mechanical property possessed by the electric infrared-heating film at a high temperature.

It should be noted that the above experimental examples are only exemplary illustration of Examples 13, 16, and 18 compared with comparative examples, and are not intended to limit the scope of the description or the claims of the present disclosure, and meanwhile, it should be noted that the electrical infrared-heating apparatuses prepared in Examples 14, 15, 17, and 19-20 and other embodiments of the present disclosure also have similar technical effects to those in Examples 13, 16, and 18 in all experimental effects related to the above experimental examples.

Since the inner wall of the tube body of the electric infrared-heating apparatus and the electric infrared-heating film in the present disclosure have a low expansion coefficient in the heating process, the probability that the electric infrared-heating film is separated from the inner wall of the apparatus is reduced, thus ensuring the stability of the structure and performance of the electric infrared-heating apparatus.

### Industrial Applicability

In the electric infrared-heating film provided in the present disclosure, the low-defect graphene, the inorganic filler, and the amorphous carbon can reduce the volumetric expansion coefficient of the electric infrared-heating film, and reduce the difference of volumetric expansion coefficients between the electric infrared-heating film and the matrix materials such as ceramic, silica, or high-boron thermal-resistant glass, thus avoiding falling off of the electric infrared-heating film from surfaces of these materials, and prolonging the service lifetime of the electric infrared-heating apparatus. The electric infrared-heating film prepared by the method in the present disclosure and the electric infrared-heating apparatus including the same have excellent application values.

## Claims

1. An electric infrared-heating film (2), wherein the electric infrared-heating film (2) is mainly composed of following components in parts by weight: 10-15 parts of low-defect graphene, and 5~10 parts of amorphous carbon,
and **characterised by**
further 5-20 parts of inorganic filler.

2. The electric infrared-heating film (2) according to claim 1, wherein in a Raman spectrogram of the low-defect graphene, a ratio of an intensity of a D peak to an intensity of a G peak is not greater than 1/10, and a carbon-oxygen molar ratio in the low-defect graphene is not less than 20:1.

3. The electric infrared-heating film (2) according to claim 1 or 2, wherein the Raman spectrogram of the low-defect graphene has a 2D peak, and a distance between the 2D peak and the G peak is reduced by 5 cm⁻¹ or more compared with a distance between a 2D peak and a G peak of natural flake graphite.

4. The electric infrared-heating film (2) according to any one of claims 1-3, wherein a thermal expansion coefficient of the inorganic filler in a range of an operating-condition temperature of the electric infrared-heating film (2) or in a range of 0-600 °C is less than or equal to 5×10⁻⁷/K.

5. The electric infrared-heating film (2) according to any one of claims 1-4, wherein a D50 particle size of the inorganic filler is less than a D50 particle size of the low-defect graphene; and
preferably, the particle size D50 of the inorganic filler is less than 1/150 of the D50 particle size of the low-defect graphene.

6. The electric infrared-heating film (2) according to any one of claims 1-5, wherein the inorganic filler is any one or any combination of aluminum oxide ceramic powder, zirconium oxide ceramic powder, silicon oxide powder, mica powder, and silicon carbide powder filling materials; and a D50 particle size of the inorganic filler is less than or equal to 100 nm.

7. The electric infrared-heating film (2) according to any one of claims 1-6, wherein a thickness of the electric infrared-heating film (2) is not greater than 100 µm.

8. The electric infrared-heating film (2) according to any one of claims 1-6, wherein a thickness of the electric infrared-heating film (2) is 10~30 µm.

9. A manufacturing method for the electric infrared-heating film (2) according to claim 1, **characterized by** comprising following steps: coating a slurry mainly composed of the low-defect graphene, the inorganic filler, a film-forming agent, and a solvent into a film, volatilizing the solvent, and then performing a carbonization treatment, to obtain the electric infrared-heating film (2), wherein the film-forming agent is an organic polymer.

10. The manufacturing method for the electric infrared-heating film (2) according to claim 9, wherein the organic polymer is one or any combination of polyolefin, polystyrene, polyacrylate polymer, polyethylene oxide, polyvinylidene fluoride, polyimide, polyurethane, polyacrylonitrile, and phenolic resin.

11. The manufacturing method for the electric infrared-heating film (2) according to claim 9 or 10, wherein the slurry further comprises a graphene dispersing agent; the graphene dispersing agent comprises a slurry dispersing agent and a thin film dispersing agent; the slurry dispersing agent is one or any combination selected from diphenyl ether, C12-C16 alkyl benzene sulfonate, ethylene oxide, polyethylene glycol, dibasic acid ester, C12-C16 alkyl diphenyl ether monosulfonate, C12-C16 alkyl diphenyl ether disulfonate, C12-C16 alkyl sulfonate, and p-C12-C16 alkyl benzene sulfonate; and the thin film dispersing agent is one or any combination selected from C12-C16 alkyl diphenyl ether monosulfonate, C12-C16 alkyl sulfonate, alkyl polyglucose, propylene oxide, fatty alcohol alkoxy compound, hydroxyl propyl methyl cellulose, and polyvinylpyrrolidone.

12. The manufacturing method for the electric infrared-heating film (2) according to any one of claims 9-11, wherein the carbonization treatment is performed at a temperature of 600-1200 °C, for not less than 4 h.

13. An electric infrared-heating apparatus, **characterized by** comprising:
an electric infrared-heating element; and
the electric infrared-heating film (2) according to any one of claims 1~8, arranged on an inner wall of the electric infrared-heating element, and sealed inside the electric infrared-heating element, wherein
preferably, the electric infrared-heating element comprises one of a lamp-type electric infrared-heating element, a tubular electric infrared-heating element, or a plate-type electric infrared-heating element.

14. An electric infrared-heating apparatus, **characterized by** comprising:
a tube body;
the electric infrared-heating film (2) according to any one of claims 1~8, arranged on an inner wall of the tube body, and sealed inside the tube body; and
two electrodes (3), both being electrically connected to the electric infrared-heating apparatus, and making the electric infrared-heating film (2) emit heat when being powered on,
preferably, the tube body is a silica tube (1), a ceramic tube or a glass tube.

15. An electric infrared-heating apparatus, **characterized by** comprising:
a plate-type electric infrared-heating element; and
the electric infrared-heating film (2) according to any one of claims 1~8,
wherein
the plate-type electric infrared-heating element comprises a panel structure (5) and an electrode (3); the electric infrared-heating film (2) is arranged on an inner wall of the panel structure (5), and sealed inside the panel structure (5), and the electrode (3) is electrically connected to the electric infrared-heating apparatus, and makes the electric infrared-heating film (2) emit heat when being powered on.

## Patentansprüche

1. Elektrische Infrarot-Heizfolie (2), wobei die elektrische Infrarot-Heizfolie (2) hauptsächlich aus folgenden Komponenten in Gewichtsteilen besteht: 10-15 Teile Graphen mit geringen Defekten und 5~10 Teile amorpher Kohlenstoff,
und **gekennzeichnet durch** weitere 5~20 Teile anorganischen Füllstoff.

2. Elektrische Infrarot-Heizfolie (2) nach Anspruch 1, wobei in einem Raman-Spektrogramm des Graphens mit wenigen Defekten ein Verhältnis einer Intensität eines D-Peaks zu einer Intensität eines G-Peaks nicht größer als 1/10 ist und ein Kohlenstoff-Sauerstoff-Molverhältnis in dem Graphen mit wenigen Defekten nicht kleiner als 20:1 ist.

3. Elektrische Infrarot-Heizfolie (2) nach Anspruch 1 oder 2, wobei das Raman-Spektrogramm des Graphens mit geringen Defekten einen 2D-Peak aufweist und ein Abstand zwischen dem 2D-Peak und dem G-Peak im Vergleich zu einem Abstand zwischen einem 2D-Peak und einem G-Peak von natürlichem Flockengraphit um 5 cm⁻¹ oder mehr verringert ist.

4. Elektrische Infrarot-Heizfolie (2) nach einem der Ansprüche 1 bis 3, wobei ein Wärmeausdehnungskoeffizient des anorganischen Füllstoffs in einem Bereich einer Betriebstemperatur der elektrischen Infrarot-Heizfolie (2) oder in einem Bereich von 0-600 °C kleiner oder gleich 5 x 10⁻⁷/K ist.

5. Elektrische Infrarot-Heizfolie (2) nach einem der Ansprüche 1 bis 4, wobei eine D50-Partikelgröße des anorganischen Füllstoffs kleiner ist als eine D50-Partikelgröße des Graphens mit geringen Defekten; und vorzugsweise die Partikelgröße D50 des anorganischen Füllstoffs kleiner ist als 1/150 der D50-Partikelgröße des Graphens mit geringen Defekten.

6. Elektrische Infrarot-Heizfolie (2) nach einem der Ansprüche 1 bis 5, wobei der anorganische Füllstoff einer oder eine Kombination der Füllstoffe Aluminiumoxid-Keramikpulver, Zirkoniumoxid-Keramikpulver, Siliziumoxidpulver, Glimmerpulver und Siliziumkarbidpulver ist und die D50-Partikelgröße des anorganischen Füllstoffs kleiner oder gleich 100 nm ist.

7. Elektrische Infrarot-Heizfolie (2) nach einem der Ansprüche 1 bis 6, wobei die Dicke der elektrischen Infrarot-Heizfolie (2) nicht größer als 100 µm ist.

8. Elektrische Infrarot-Heizfolie (2) nach einem der Ansprüche 1 bis 6, wobei die Dicke der elektrischen Infrarot-Heizfolie (2) 10-30 µm ist.

9. Herstellungsverfahren der elektrischen Infrarot-Heizfolie (2) nach Anspruch 1, **gekennzeichnet durch** die folgenden Schritte: Aufbringen einer Aufschlämmung, die hauptsächlich aus dem Graphen mit geringen Defekten, dem anorganischen Füllstoff, einem Folienbildner und einem Lösungsmittel besteht, auf eine Folie, Verflüchtigen des Lösungsmittels und anschließendes Durchführen einer Karbonisierungsbehandlung, um die elektrische Infrarot-Heizfolie (2) zu erhalten, wobei der Folienbildner ein organisches Polymer ist.

10. Herstellungsverfahren für die elektrische Infrarot-Heizfolie (2) nach Anspruch 9, wobei das organische Polymer eines oder eine beliebige Kombination aus Polyolefin, Polystyrol, Polyacrylatpolymer, Polyethylenoxid, Polyvinylidenfluorid, Polyimid, Polyurethan, Polyacrylnitril und Phenolharz ist.

11. Herstellungsverfahren für die elektrische Infrarot-Heizfolie (2) nach Anspruch 9 oder 10, wobei die Aufschlämmung ferner ein Graphen-Dispergiermittel umfasst; das Graphen-Dispergiermittel ein Aufschlämmungsdispergiermittel und ein Dünnschicht-Dispergiermittel umfasst; das Aufschlämmungsdispergiermittel eines oder eine beliebige Kombination ausgewählt aus Diphenylether, C12-C16-Alkylbenzolsulfonat, Ethylenoxid, Polyethylenglykol, zweibasischem Säureester, C12-C16-Alkyldiphenylethermonosulfonat, C12-C16-Alkyldiphenyletherdisulfonat, C12-C16-Alkylsulfonat und *p*-C12-C16-Alkylbenzolsulfonat ist; und das Dünnschichtdispergierungsmittel eines oder eine beliebige Kombination ausgewählt aus C12-C16-Alkyldiphenylethermonosulfonat, C12-C16-Alkylsulfonat, Alkylpolyglucose, Propylenoxid, Fettalkoholalkoxyverbindung, Hydroxylpropylmethylcellulose und Polyvinylpyrrolidon ist.

12. Herstellungsverfahren für die elektrische Infrarot-Heizfolie (2) nach einem der Ansprüche 9 bis 11, wobei die Karbonisierungsbehandlung bei einer Temperatur von 600-1200 °C für mindestens 4 Stunden durchgeführt wird.

13. Elektrische Infrarot-Heizvorrichtung, **gekennzeichnet durch**:
ein elektrisches Infrarot-Heizelement; und
die elektrische Infrarot-Heizfolie (2) nach einem der Ansprüche 1~8, die an einer Innenwand des elektrischen Infrarot-Heizelements angeordnet und im Inneren des elektrischen Infrarot-Heizelements versiegelt ist,
wobei
das elektrische Infrarot-Heizelement vorzugsweise eines von einem elektrischen Infrarot-Heizelement vom Lampentyp, einem elektrischen Infrarot-Heizelement vom Rohrtyp oder einem elektrischen Infrarot-Heizelement vom Plattentyp umfasst.

14. Elektrische Infrarot-Heizvorrichtung, **gekennzeichnet durch**:
einen Rohrkörper;
die elektrische Infrarot-Heizfolie (2) nach einem der Ansprüche 1~8, die an einer Innenwand des Rohrkörpers angeordnet und im Rohrkörper versiegelt ist; und
zwei Elektroden (3), die beide elektrisch mit der elektrischen Infrarot-Heizvorrichtung verbunden sind und die elektrische Infrarot-Heizfolie (2) veranlassen, Wärme abzugeben, wenn sie eingeschaltet wird,
vorzugsweise der Rohrkörper ein Quarzrohr (1), ein Keramikrohr oder ein Glasrohr ist.

15. Elektrische Infrarot-Heizvorrichtung, **gekennzeichnet durch**:
ein plattenförmiges elektrisches Infrarot-Heizelement; und
die elektrische Infrarot-Heizfolie (2) nach einem der Ansprüche 1~8, wobei
das plattenförmige elektrische Infrarot-Heizelement eine Plattenstruktur (5) und eine Elektrode (3) umfasst; die elektrische Infrarot-Heizfolie (2) an einer Innenwand der Plattenstruktur (5) angeordnet und in der Plattenstruktur (5) versiegelt ist, und die Elektrode (3) elektrisch mit dem elektrischen Infrarot-Heizgerät verbunden ist und die elektrische Infrarot-Heizfolie (2) veranlasst, Wärme abzugeben, wenn sie eingeschaltet wird.

## Revendications

1. Film chauffant à infrarouge électrique (2), dans lequel le film chauffant à infrarouge électrique (2) est principalement composé des composants suivants en parties en poids : 10 à environ 15 parties de graphène à faible défaut et 5 à environ 10 parties de carbone amorphe, et **caractérisé par** 5 à 20 parties supplémentaires de charge inorganique.

2. Film chauffant à infrarouge électrique (2) selon la revendication **1,** dans lequel, dans un spectrogramme Raman du graphène à faible défaut, un rapport d'une intensité d'un pic D à une intensité d'un pic G n'est pas supérieur à 1/10, et un rapport molaire carbone-oxygène dans le graphène à faible défaut n'est pas inférieur à 20:1.

3. Film chauffant à infrarouge électrique (2) selon la revendication 1 ou 2, dans lequel le spectrogramme Raman du graphène à faible défaut présente un pic 2D, et une distance entre le pic 2D et le pic G est réduite de 5 cm⁻¹ ou plus par rapport à une distance entre un pic 2D et un pic G de graphite en paillettes naturel.

4. Film chauffant à infrarouge électrique (2) selon l'une quelconque des revendications 1 à 3, dans lequel un coefficient de dilatation thermique de la charge inorganique dans une plage de température de condition de fonctionnement du film chauffant à infrarouge électrique (2) ou dans une plage de 0 à 600 °C est inférieur ou égal à 5x10⁻⁷ /K.

5. Film chauffant à infrarouge électrique (2) selon l'une quelconque des revendications 1 à 4, dans lequel une taille de particules D50 de la charge inorganique est inférieure à une taille de particules D50 du graphène à faible défaut ; et
de préférence, la taille de particules D50 de la charge inorganique est inférieure à 1/150 de la taille de particules D50 du graphène à faible défaut.

6. Film chauffant à infrarouge électrique (2) selon l'une quelconque des revendications 1 à 5, dans lequel la charge inorganique est un matériau de remplissage quelconque ou une combinaison de matériaux de remplissage en poudre de céramique d'oxyde d'aluminium, de poudre de céramique d'oxyde de zirconium, de poudre d'oxyde de silicium, de poudre de mica et de poudre de carbure de silicium ; et une taille de particules D50 de la charge inorganique est inférieure ou égale à 100 nm.

7. Film chauffant à infrarouge électrique (2) selon l'une quelconque des revendications 1 à 6, dans lequel l'épaisseur du film chauffant infrarouge électrique (2) n'est pas supérieure à 100 µm.

8. Film chauffant à infrarouge électrique (2) selon l'une quelconque des revendications 1 à 6, dans lequel une épaisseur du film chauffant à infrarouge électrique (2) est de 10 à environ 30 µm.

9. Procédé de fabrication du film chauffant à infrarouge électrique (2) selon la revendication 1, **caractérisé en ce qu'**il comprend les étapes suivantes : le revêtement d'une suspension composée principalement du graphène à faible défaut, de la charge inorganique, d'un agent filmogène et d'un solvant dans un film, une volatilisation du solvant, puis la réalisation d'un traitement de carbonisation, pour obtenir le film chauffant à infrarouge électrique (2), dans lequel l'agent filmogène est un polymère organique.

10. Procédé de fabrication du film chauffant à infrarouge électrique (2) selon la revendication 9, dans lequel le polymère organique est un ou toute combinaison de polyoléfine, de polystyrène, de polymère de polyacrylate, de poly(oxyde d'éthylène), de poly(fluorure de vinylidène), de polyimide, de polyuréthane, de polyacrylonitrile et de résine phénolique.

11. Procédé de fabrication du film chauffant à infrarouge électrique (2) selon la revendication 9 ou 10, dans lequel la suspension comprend en outre un agent de dispersion de graphène ; l'agent de dispersion de graphène comprend un agent de dispersion de suspension et un agent de dispersion de film mince ; l'agent de dispersion de suspension est un ou toute combinaison choisie parmi le diphényléther, le benzènesulfonate d'alkyle en C12-C16, l'oxyde d'éthylène, le polyéthylène glycol, l'ester d'acide difonctionnel, le diphényléthermonosulfonate d'alkyle en C12-C16, le diphénylétherdisulfonate d'alkyle en C12-C16, le sulfonate d'alkyle en C12-C16 et le benzènesulfonate de p-alkyle en C12-C16 ; et l'agent de dispersion de film mince est un ou toute combinaison choisie parmi le diphényléthermonosulfonate **d'alkyle** en C12-C16, le sulfonate **d'alkyle** en C12-C16, l'alkylpolyglucose, l'oxyde de propylène, un composé alcoxy d'alcool gras, l'hydroxypropylméthylcellulose et la polyvinylpyrrolidone.

12. Procédé de fabrication du film chauffant à infrarougeélectrique (2) selon l'une quelconque des revendications 9 à 11, dans lequel le traitement de carbonisation est réalisé à une température de 600 à 1 200 °C, pendant au moins 4 h.

13. Appareil de chauffage à infrarouge électrique, **caractérisé en ce qu'**il comprend :
un élément chauffant à infrarouge électrique ; et
le film chauffant à infrarouge électrique (2) selon l'une quelconque des revendications 1 à environ **8,** disposé sur une paroi interne de l'élément chauffant électrique à infrarouge, et scellé à l'intérieur de l'élément chauffant à infrarouge électrique, dans lequel
de préférence, l'élément chauffant à infrarouge électrique comprend un élément chauffant à infrarouge électrique de type lampe, un élément chauffant à infrarouge électrique tubulaire ou un élément chauffant à infrarouge électrique de type plaque.

14. Appareil de chauffage à infrarouge électrique, **caractérisé en ce qu'**il comprend :
un corps de tube ;
le film chauffant à infrarouge électrique (2) selon l'une quelconque des revendications 1 à environ **8,** disposé sur une paroi interne du corps de tube et scellé à l'intérieur du corps de tube ; et
deux électrodes (3), toutes deux connectées électriquement à l'appareil de chauffage à infrarouge électrique, et faisant en sorte que le film de chauffage à infrarouge électrique (2) émette de la chaleur lorsqu'il est mis sous tension,
de préférence, le corps de tube est un tube de silice (1), un tube en céramique ou un tube en verre.

15. Appareil de chauffage à infrarouge électrique, **caractérisé en ce qu'**il comprend :
un élément chauffant à infrarouge électrique de type plaque ; et
le film chauffant à infrarouge électrique (2) selon l'une quelconque des revendications 1 à environ 8, dans lequel l'élément chauffant à infrarouge électrique de type plaque comprend une structure de panneau (5) et une électrode (3) ; le film chauffant à infrarouge électrique (2) est disposé sur une paroi interne de la structure de panneau (5), et scellé à l'intérieur de la structure de panneau (5), et l'électrode (3) est connectée électriquement à l'appareil de chauffage à infrarouge électrique, et fait que le film chauffant à infrarouge électrique (2) émet de la chaleur lorsqu'il est mis sous tension.
